# FASCICULE DE BREVET EUROPEEN

(11) **EP 1 245 060 B1**
(45) Date de publication et mention de la délivrance du brevet: **06.10.2004**
(21) Numéro de dépôt: 00981464.1
(22) Date de dépôt: 24.11.2000
(51) Int. Cl.: H01Q 1/22, H01Q 7/00, H01Q 7/08

(54) **ANTENNE RADIOFREQUENCE POUR DISPOSITIF D'INTERROGATION D'OBJETS PORTANT UNE ANTENNE RADIOFREQUENCE ASSOCIEE A UN CIRCUIT ELECTRONIQUE**
ANTENNE FÜR RADIOFREQUENZEN FÜR EIN OBJEKTABFRAGEGERÄT MIT EINER RADIOFREQUENZANTENNE UND EIN DAMIT VERBUNDENER ELEKTRISCHER SCHALTKREIS
RADIO FREQUENCY ANTENNA FOR AN OBJECT INTERROGATION DEVICE COMPRISING A RADIOFREQUENCY ANTENNA ASSOCIATED WITH AN ELECTRONIC CIRCUIT

(30) Priorité: 16.12.1999 FR 9915901
(43) Date de publication de la demande: 02.10.2002
(73) Titulaire: Tagsys SA, 13821 La Penne-sur-Huveaune (FR)
(72) Inventeur: SANOGO, Lassina, F-04100 Manosque (FR)
(74) Mandataire: Breese, Pierre
(86) Numéro de dépôt international: PCT/FR2000/003285
(87) Numéro de publication internationale: WO 2001/045198

(56) Documents cités:
- EP-A- 0 610 546
- WO-A-98/05171
- US-A- 5 420 579
- US-A- 5 623 271

## Description

L'invention concerne de manière générale les systèmes d'identification d'objets du type dans lequel chaque objet porte une antenne radiofréquence associée à un circuit électronique de manière à être interrogé par un dispositif d'interrogation comprenant une antenne radiofréquence d'émission/réception. Elle concerne plus particulièrement une telle antenne radiofréquence d'émission/réception.

Il est connu d'identifier des objets en les munissant d'étiquettes dites électroniques qui comprennent une antenne radiofréquence associée à un circuit électronique. Ce dernier comprend au moins une mémoire contenant les caractéristiques d'identification de l'objet. Un dispositif d'interrogation émet, via son antenne radiofréquence, des messages d'interrogation vers les étiquettes électroniques et reçoit de ces dernières des messages en réponse contenant les informations demandées. Ces messages d'interrogation et de réponse sont émis selon un procédé dit d'anti-collision de manière à faire en sorte que les étiquettes électroniques émettent leurs messages de réponse à des instants différents.

Un tel système d'identification d'objets fonctionne de manière satisfaisante lorsque les étiquettes électroniques sont suffisamment éloignées les unes des autres. En effet, dans le cas d'étiquettes électroniques très proches les unes des autres, par exemple disposées sur des feuilles accolées les unes aux autres, les circuits de résonance des différentes antennes se désaccordent par rapport à la fréquence centrale F0 pour présenter des fréquences de résonance inférieure et supérieure à F0. Il en résulte que la transmission des messages est perturbée, ce qui conduit à des défauts d'identification. Un tel mauvais fonctionnement a été constaté lorsque les objets à identifier sont des livres de faible épaisseur qui sont juxtaposés sur une étagère verticalement ou horizontalement.

On connaît dans l'art antérieur la demande de brevet WO 9805171 décrit un dispositif de communication de données à fréquences radioélectriques ajustable comportant un circuit intégré à semi-conducteurs, à circuits intégrés comprenant des circuits de réception des interrogations faisant partie des circuits intégrés, une antenne, une alimentation configurée pour alimenter le dispositif de communication. Au moins l'un ou l'autre de l'antenne ou des circuits de réception d'interrogations présente des caractéristiques électriques reconfigurables pour la syntonisation sélective des circuits dans une plage d'états syntonisés et désyntonisés de sorte qu'une sensibilité voulue du récepteur du dispositif de communication soit obtenue.

Un but de la présente invention est donc de réaliser une antenne radiofréquence d'émission/réception pour un dispositif d'interrogation d'étiquettes électroniques portées par des objets à identifier qui permet d'interroger toutes les étiquettes électroniques quelle que soit la distance qui les sépare.

L'invention concerne une antenne radiofréquence d'émission/réception pour un dispositif d'interrogation d'étiquettes électroniques portées par des objets, ladite antenne radiofréquence d'émission/réception étant accordée sur une fréquence F0 et chaque étiquette électronique comportant une antenne radiofréquence accordée sur la fréquence F0 et étant associée à un circuit électronique, caractérisée en ce que l'antenne radiofréquence d'émission/réception est configurée de manière à créer un champ magnétique qui modifie la fréquence d'accord des antennes radiofréquence des étiquettes électroniques dans un sens tendant à la recentrer vers la fréquence F0.

Le champ magnétique créé par l'antenne radiofréquence d'émission/réception présente des lignes de force qui sont sensiblement perpendiculaires au plan des antennes des étiquettes électroniques à interroger.

Une telle antenne est réalisée par exemple, par un enroulement planaire comportant une pluralité de spires planes dont la largeur est sensiblement supérieure à leur espacement. Elle peut également être réalisée par un enroulement comportant une pluralité de spires non jointives bobinées sur un support en ferrite. Dans ce cas, l'espacement des spires est sensiblement supérieur à leur diamètre.

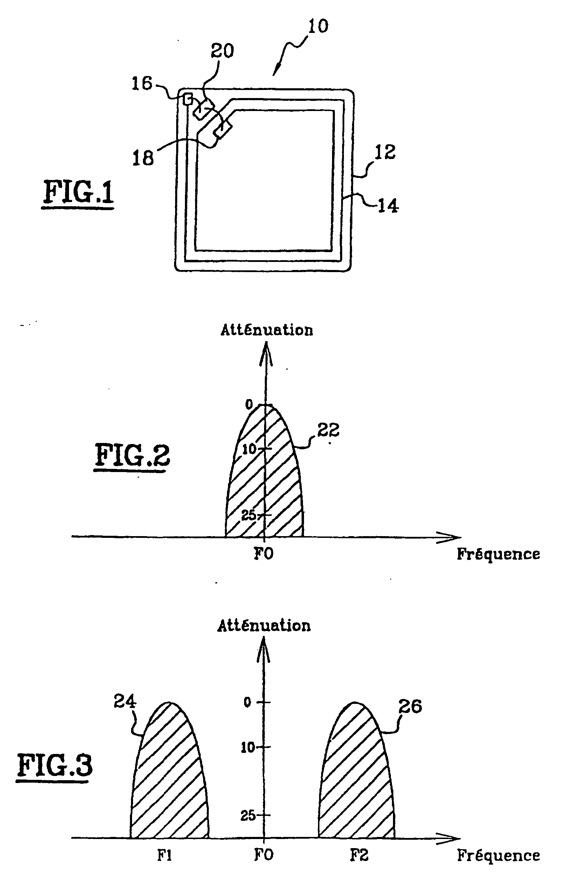

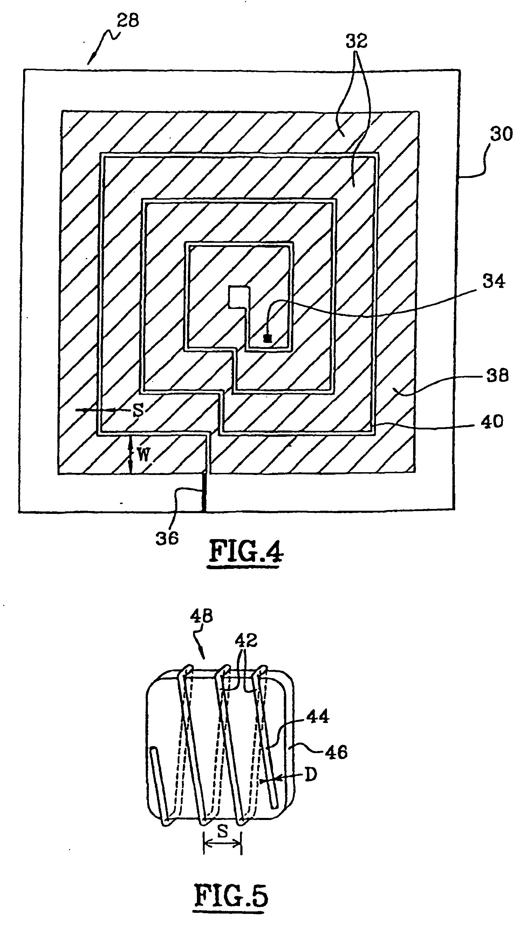

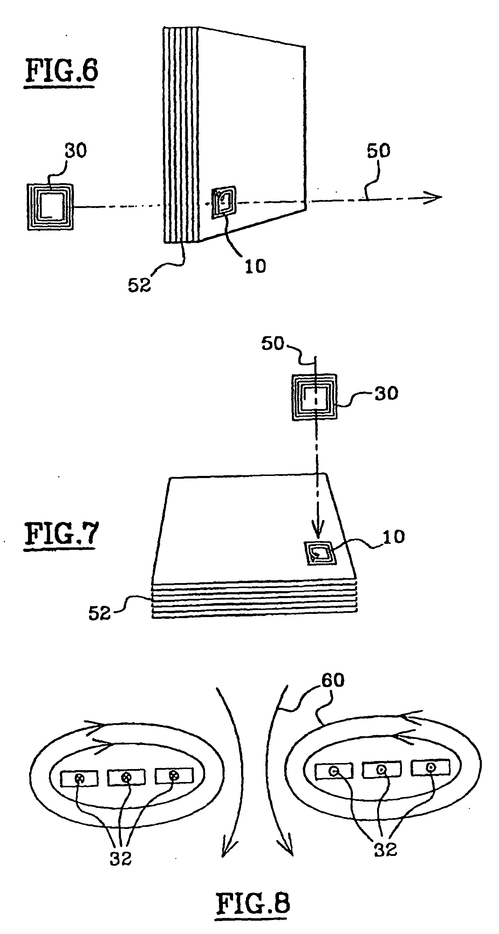

D'autres caractéristiques et avantages de la présente invention apparaîtront à la lecture de la description suivante d'exemples particuliers de réalisation, ladite description étant faite en relation avec les dessins joints dans lesquels :
■ la figure 1 est un schéma d'une antenne d'une étiquette électronique destinée à être portée par un objet tel qu'un livre,
■ la figure 2 est un diagramme montrant la courbe d'atténuation d'une antenne radiofréquence d'une étiquette électronique,
■ la figure 3 est un diagramme montrant les courbes d'atténuation de deux antennes radiofréquence fortement couplées,
■ la figure 4 est un schéma montrant un enroulement planaire pour réaliser un premier type d'antenne radiofréquence d'émission/réception selon l'invention,
■ la figure 5 est un schéma montrant un enroulement autour d'un support en ferrite pour réaliser un deuxième type d'antenne radiofréquence d'émission/réception selon l'invention,
■ la figure 6 illustre la position et le sens du déplacement de l'antenne radiofréquence d'émission/réception selon l'invention par rapport à des étiquettes électroniques disposées verticalement,
■ la figure 7 illustre la position et le sens de déplacement de l'antenne radiofréquence d'émission/réception selon l'invention par rapport à des étiquettes électroniques disposées horizontalement, et
■ la figure 8 est un schéma montrant les lignes de force du champ magnétique créé par les conducteurs 32 de l'antenne représentée sur la figure 4.

Une étiquette électronique 10 comprend, par exemple, un support souple 12 en matériau diélectrique ayant deux à trois centimètres de côté sur lequel sont disposés un enroulement conducteur 14 présentant deux bornes de connexion 16 et 18 et un circuit électronique 20 qui est connecté aux bornes 16 et 18.

Le circuit électronique 20 est bien connu et ne sera pas décrit de manière plus détaillée ici.

Dans le cas d'un livre, l'étiquette électronique 10 est collée, par exemple, sur la première ou la dernière page à proximité de la reliure et de la partie inférieure (figures 6 et 7).

L'enroulement 14 constitue une bobine qui, en combinaison avec un condensateur non représenté, réalise un circuit accordé à une fréquence de résonance F0. Cette fréquence F0 est par exemple égale à 13,56 Mégahertz. La courbe d'atténuation d'un tel circuit accordé en fonction de la fréquence est donnée par le diagramme 22 de la figure 2 centré sur la fréquence F0. Lorsque deux étiquettes 10 sont juxtaposées l'une. sur l'autre, les courbes d'atténuation mesurées sont celles de la figure 3 c'est-à-dire des courbes analogues à celle de la figure 2 mais décalées l'une 24 vers une fréquence F1 < F0 et l'autre 26 vers une fréquence F2 > F0.

Selon l'invention, l'antenne radiofréquence 28 pour le dispositif d'interrogation des étiquettes électroniques 10 comprend un support rigide 30 en matériau diélectrique, de dix centimètres de côté environ, sur lequel sont disposés un enroulement conducteur planaire 32 présentant deux bornes de connexion 34 et 36 à un circuit électronique non représenté.

L'enroulement 32 est réalisé par des spires constituées de bandes larges conductrices 38 séparées par un espace de faible largeur 40. A tire d'exemple, la bande conductrice 38 a une largeur W de dix millimètres environ tandis que l'espace interbandes S 40 est d'un millimètre environ, soit un ordre de grandeur de différence entre les dimensions. Cet enroulement 32, lorsqu'il est alimenté par un courant radiofréquence, crée un champ magnétique qui modifie la fréquence d'accord F1 pour la ramener vers la fréquence F0, ce qui permet la réussite de l'interrogation.

Dans le plan perpendiculaire à celui du support rigide 30 (figure 8), les spires de l'enroulement 32 créent un champ magnétique latéral dont les lignes de force, référencées 60, se rebouclent sur des distances relativement éloignées du plan du support rigide 30.

Pour une meilleure efficacité, les lignes de force de ce champ magnétique doivent être sensiblement perpendiculaires au plan de l'enroulement d'antenne de l'étiquette électronique.

Les dimensions de l'enroulement 32, et donc de l'antenne, dépendent principalement de la distance maximale entre l'antenne du dispositif d'interrogation et l'étiquette électronique à interroger, compte étant tenu des décalages relatifs entre les étiquettes.

Ainsi, l'antenne 28 ne devra pas être trop petite vis-à-vis de l'étiquette électronique pour éviter d'avoir à faire une recherche de localisation selon la position de l'étiquette électronique. Elle ne devra pas être trop grande pour éviter les fuites des lignes de force du champ, lignes de force qui ne seraient plus captées par l'antenne de l'étiquette électronique. Ces différents critères conduisent à une antenne 28 qui a une surface égale à quinze fois celle de l'étiquette électronique, soit une différence sensiblement égale à un ordre de grandeur.

La présence de l'antenne 28, parcouru par un courant à la fréquence F0, à proximité d'une étiquette électronique 10, a pour effet d'induire un courant alternatif dans l'enroulement d'antenne de l'étiquette électronique, ce qui crée en réaction un champ magnétique opposé agissant sur l'antenne 28. Comme cette antenne 28 se présente sous la forme d'un plan métallique par suite des bandes conductrices 38 accolées, elle a pour effet de réduire le couplage entre les deux enroulements, ce qui correspond à une diminution de la self-inductance L de l'antenne de l'étiquette électronique d'où une augmentation de la fréquence d'accord de F1 à F0.

L'antenne du dispositif d'interrogation peut également être réalisée selon le schéma de la figure 5 par un enroulement 42 de spires non jointives d'un fil conducteur 44 autour d'un support en ferrite 46, par exemple une plaque de ferrite de quelques centimètres de côté environ. La plaque ferrite modifie la fréquence d'accord de l'antenne de l'étiquette pour la ramener de F2 vers F0. A titre d'exemple, les spires au nombre de trois environ, ont un diamètre D d'un millimètre environ et l'espacement S entre les spires est de vingt millimètres environ. La plaque de ferrite 46 par exemple est un carré de dix centimètres de côté.

Dans ce deuxième exemple de réalisation, l'espacement S est sensiblement supérieur au diamètre D, d'un ordre de grandeur environ.

La plaque de ferrite 46 a pour effet de concentrer dans le ferrite les lignes de force du champ magnétique du fait de son coefficient de perméabilité élevé, ce qui augmente le couplage entre les deux enroulements, d'où une augmentation de la self-inductance L de l'antenne de l'étiquette électronique dont la fréquence d'accord diminue de F2 à F0.

Pour réaliser une interrogation efficace des étiquettes, il est recommandé, d'une part de disposer les étiquettes électroniques 10 sur les objets tels que les documents 52 des figures 6 et 7 selon des spécifications rigoureuses et, d'autre part, de déplacer l'antenne du dispositif d'interrogation selon des règles déterminées. Les spécifications concernant la disposition des étiquettes ont été définies ci-dessus. En ce qui concerne le déplacement de l'antenne 28 ou 48, sa face plane doit être perpendiculaire au plan des étiquettes électroniques 10 et se déplacer (flèche 50) perpendiculairement au plan des étiquettes électroniques 10. Bien entendu, le trajet de l'antenne doit être le plus proche possible des étiquettes électroniques 10.

L'antenne selon l'invention présente les avantages suivants :
■ elle est légère, reproductible et peu coûteuse ;
■ elle permet une grande vitesse de balayage des étagères où sont rangés les documents tels que des livres ;
■ elle est peu sensible à l'environnement métallique des étagères, et
■ elle permet de réaliser un équipement portatif car elle ne nécessite pas une puissance de sortie élevée.

## Revendications

1. Antenne radiofréquence d'émission/réception (28, 48) de dispositif d'interrogation d'étiquettes électroniques (10) portées par des objets, ladite antenne radiofréquence (28, 48) étant accordée sur la fréquence F0, chaque étiquette électronique comportant une antenne radiofréquence accordée sur la fréquence F0 et étant associée à un circuit électronique (20), **caractérisé en ce que** l'antenne (28, 48) se présente à l'antenne radiofréquence de l'étiquette électronique sous la forme d'un plan métallique suite à sa pluralité de spires comportant des bandes conductrices (38) accolées ou sous la forme d'une plaque de ferrite comprenant un enroulement comportant une pluralité de spires non jointives, le champ magnétique créé par l'antenne radiofréquence d'émission/réception (28, 48) présentant des lignes de force sensiblement perpendiculaires au plan de l'antenne radiofréquence de l'étiquette électronique, la fréquence d'accord des antennes radiofréquence des étiquettes électroniques étant modifiée dans un sens tendant à la recentrer vers celle (FO) de l'antenne (28, 48) du dispositif d'interrogation.

2. Antenne selon la revendication 1 ou 2, **caractérisée en ce que** l'antenne du dispositif d'interrogation comprend un enroulement planaire comportant une pluralité de spires (32) dont la largeur (W) est sensiblement supérieure à leur espacement (S).

3. Antenne selon la revendication 2, **caractérisé en ce que** la largeur (W) d'une spire (32, 38) est supérieure à l'espacement (40, S).

4. Antenne selon la revendication 1, **caractérisé en ce que** les spires (44) non jointives présentent un espacement (S) qui est sensiblement supérieure à leur diamètre (D).

5. Antenne selon la revendication 4, **caractérisé en ce que** l'espacement (S) entre deux spires consécutives (42) est supérieure à leur diamètre (D).

6. Antenne selon l'une quelconque des revendications précédentes, **caractérisé en ce que** les dimensions de l'antenne du dispositif d'interrogation sont déterminées par la distance maximale entre ladite antenne (28, 48), et les antennes (10) des objets ainsi que par les dimensions desdits étiquettes électroniques.

7. Antenne selon l'une quelconque des revendications précédentes, **caractérisé en ce que** la surface de l'antenne (28, 48) du dispositif d'interrogation est supérieure à celle de l'antenne de l'étiquette électronique (10).

8. Dispositif d'interrogation d'étiquettes électroniques (10) **caractérisé en ce qu'**il comprend une antenne d'émission/réception (28, 48), selon l'une quelconque des revendications précédentes 1 à 7.

## Claims

1. Transmission / reception radiofrequency antenna (28, 48) for a device designed to interrogate electronic labels (10) fitted on objects, the said radiofrequency antenna (28, 48) comprising adjacent conducting strips (38) matched to frequency F0, each electronic label comprising a radiofrequency antenna matched to frequency F0 and being associated with an electronic circuit (20), **characterised in that** the antenna (28, 48) is placed in front of the radiofrequency antenna of the electronic label in the form of a metallic plane generated by its plurality of turns, comprising adjacent conducting strips (38), or in the form of a ferrite plate including a winding comprising a plurality of non-adjacent turns, the magnetic field created by the transmission / reception radiofrequency antenna (28, 48) having lines of force approximately perpendicular to the plane of the radiofrequency antenna of the electronic label, the matching frequency of the radiofrequency antennas of the electronic labels being modified so as to tend to recentre it closer to the frequency (F0) of the antenna (28, 48) of the interrogation device.

2. Antenna according to claim 1 or 2, **characterised in that** the antenna of the interrogation device comprises a planar winding comprising a plurality of turns (32), for which the width (W) is significantly greater than their spacing (S).

3. Antenna according to claim 2, **characterised in that** the width (W) of a turn (32, 38) is greater than the spacing (40, S).

4. Antenna according to claim 1, **characterised in that** the spacing (S) between non-adjacent turns (44) is substantially greater than their diameter.

5. Antenna according to claim 4, **characterised in that** the spacing (S) between two consecutive turns (42) is greater than their diameter (D).

6. Antenna according to any one of the previous claims; **characterised in that** the dimensions of the interrogation device antenna are determined by the maximum distance between the said antenna (28, 48) and the antennas (10) of the objects and by the dimensions of the said electronic labels.

7. Antenna according to any one of the previous claims, **characterised in that** the surface area of the antenna (28, 48) of the interrogation device is greater than the surface area of the electronic label antenna (10).

8. Device for interrogation of electronic labels (10), **characterised in that** it comprises a transmission / reception antenna (28, 48) according to any one of the previous claims 1 to 7.

## Patentansprüche

1. Sende- /Empfangs-Radiofrequenzantenne (28, 48) einer Vorrichtung zur Abfrage von elektronischen Etiketten (10), die von Objekten getragen werden, wobei die besagte Radiofrequenzantenne (28, 48) an die FO Frequenz abgestimmt ist, wobei jedes elektronische Etikett eine Radiofrequenzantenne aufweist, die an die FO Frequenz abgestimmt ist, und wobei die besagte Radiofrequenzantenne mit einem elektronischen Kreis (20) assoziiert ist, **dadurch gekennzeichnet, dass** sich die Antenne (28, 48) an der Radiofrequenzantenne des elektronischen Etiketts in der Form einer metallischen Fläche darstellt, und dies infolge ihrer Mehrzahl an Windungen, wobei ebendiese Antenne leitende Bänder (38) aufweist, die aneinander liegen, oder in der Form einer Platte aus Ferrit, wobei diese eine Wicklung aufweist, die ihrerseits eine Mehrzahl an nicht aneinander gesetzten Windungen aufweist, wobei das magnetische Feld, das durch die Sende- /Empfangs-Radiofrequenzantenne (28, 48) erzeugt wird, Kraftlinien aufweist, die leicht senkrecht zu der Ebene von der Radiofrequenzantenne vom elektronischen Etikett sind, wobei die Abstimmfrequenz der Radiofrequenzantennen von den elektronischen Etiketten in eine Richtung geändert werden, die dazu führt, sie in Richtung der (F0) von der Antenne (28, 48) von der Abfragevorrichtung zu zentrieren.

2. Antenne nach Anspruch 1 oder 2, **dadurch gekennzeichnet, dass** die Antenne von der Abfragevorrichtung eine planare Wicklung aufweist, die ihrerseits eine Mehrzahl an Windungen (32) aufweist, deren Breite (W) etwas größer als ihr Abstand (S) ist.

3. Antenne nach Anspruch 2, **dadurch gekennzeichnet, dass** die Breite (W) einer Windung (32, 38) größer als der Abstand (40, S) ist.

4. Antenne nach Anspruch 1, **dadurch gekennzeichnet, dass** die nicht aneinander gesetzten Windungen (44) einen Abstand (S) aufweisen, der etwas größer als ihr Durchmesser (D) ist.

5. Antenne nach Anspruch 4, **dadurch gekennzeichnet, dass** der Abstand (S) zwischen zwei aneinander liegenden Windungen (42) größer als ihr Durchmesser (D) ist.

6. Antenne nach einem der vorhergehenden Ansprüche, **dadurch gekennzeichnet, dass** die Dimensionen der Antenne von der Abfragevorrichtung durch den maximalen Abstand zwischen der besagten Antenne (28, 48) und den Antennen (10) von den Objekten bestimmt werden, sowie durch die Dimensionen von den besagten elektronischen Etiketten.

7. Antenne nach einem der vorhergehenden Ansprüche, **dadurch gekennzeichnet, dass** die Oberfläche von der Antenne (28, 48) von der Abfragevorrichtung größer als die von der Antenne vom elektronischen Etikett (10) ist.

8. Vorrichtung zur Abfrage von elektronischen Etiketten (10) **dadurch gekennzeichnet, dass** sie eine Sende-/Empfangs-Radiofrequenzantenne (28, 48) nach einem der vorhergehenden Ansprüche 1 bis 7 aufweist.
